# EUROPÄISCHE PATENTSCHRIFT

(11) **EP 0 555 743 B1**
(45) Veröffentlichungstag und Bekanntmachung des Hinweises auf die Patenterteilung: **16.08.1995**
(21) Anmeldenummer: 93101612.5
(22) Anmeldetag: 03.02.1993
(51) Int. Cl.: C02F 3/22, F16L 9/22

(54) **Reaktor zur biologischen Reinigung von schadstoffhaltigem Wasser im Schlaufenbetrieb**
Loop reactor for biological purification of polluted water
Réacteur à boucles pour la purification biologique d'eau polluée

(30) Priorität: 09.02.1992 DE 4203742
(43) Veröffentlichungstag der Anmeldung: 18.08.1993
(73) Patentinhaber: Dyckerhoff & Widmann Aktiengesellschaft, D-81902 München (DE)
(72) Erfinder:
(74) Vertreter: Patentanwälte Möll und Bitterich

(56) Entgegenhaltungen:
- DE-A- 3 414 180
- DE-A- 3 429 355
- DE-U- 8 909 044
- DE-U- 9 017 653
- K. R. DIETRICH 'DIE ABWASSERTECHNIK' 1973 , DR. ALFRED HUETTIG, VERLAG, *Seite 109, Seite 114, letzter Absatz - Seite 115, Absatz 1*, Seite 121, Zeile 10 - letzter Absatz* *Seite 356, Absatz 5*

## Beschreibung

Die Erfindung betrifft einen Reaktor zur biologischen Reinigung von schadstoffhaltigem Wasser im Schlaufenbetrieb gemäß dem Oberbegriff des Patentanspruchs 1.

Für die Entfernung von Schadstoffen aus Abwässern ist eine Vielzahl von biologischen Verfahren bekannt. Dabei ist es auch bekannt, Abwasser in einem aeroben Verfahren in hohen zylindrischen Reaktoren zu behandeln, die aus einem vertikalen zylindrischen Gefäß und einem darin konzentrisch zu dem Außenmantel des Gefäßes angeordneten Strömungsleitrohr bestehen; diese Reaktoren werden als "Schlaufenreaktoren" bezeichnet. Die Bezeichnung "Schlaufenreaktor" deutet auf die Betriebsweise hin. Ein "Schlaufenbetrieb" wird dadurch aufrecht erhalten, daß das kontinuierlich oder diskontinuierlich zugeführte Abwasser in einer der dadurch gebildeten Kammern, insbesondere in dem inneren Strömungsleitrohr, in eine aufsteigende Bewegung versetzt wird, sei es durch Lufteintrag, sei es durch ein Rührwerk, wobei es den oberen Rand des Strömungsleitrohres überströmt und in der anderen Kammer, in diesem Falle in dem Ringraum zwischen Strömungsleitrohr und Außenmantel, absinkt, um am Gefäßboden wieder in die erste Kammer zu gelangen.

Mit einem derartigen Schlaufenreaktor lassen sich auch Schlämme und das Waschwasser bei der chemisch-physikalischen Behandlung von kontaminiertem Boden reinigen, in denen die Schadstoffe adsorbiert bzw. gelöst sind.

Schlaufenreaktoren dieser Art sind mehr oder weniger aufwendige ortsfeste Anlagen aus Stahlteilen, die entweder dort errichtet werden, wo laufend Abwässer anfallen oder die darauf angewiesen sind, daß die zu reinigenden Schlämme oder Abwässer zu diesen Anlagen hintransportiert werden. Da angesichts der immer größerwerdenden Problematik mit Altlasten die Reinigung kontaminierten Bodens an Bedeutung zunimmt, wäre es wünschenswert, diese Böden gewissermaßen "on site" zu reinigen, sie also nicht über mehr oder weniger große Entfernungen in stationäre Reinigungsanlagen transportieren zu müssen.

Vor diesem Hintergrund liegt der Erfindung die Aufgabe zugrunde, einen Schlaufenreaktor insbesondere zur biologischen Reinigung von kontaminierten Schlämmen und Wasser anzugeben, der auf einfache und wirtschaftliche Weise als temporäres, d.h. in seiner Nutzungsdauer zeitlich begrenztes Bauwerk errichtet und betrieben sowie nach Gebrauch wieder demontiert werden kann.

Gemäß der Erfindung wird diese Aufgabe durch einen Reaktor mit den Merkmalen des kennzeichnenden Teils des Patentanspruchs 1 gelöst.

Vorteilhafte Weiterbildungen ergeben sich aus den Unteransprüchen.

Der Vorteil der Erfindung besteht vor allem darin, daß die beiden, einen Schlaufenbetrieb ermöglichenden Behältersysteme aus serienmäßigen Stahlbetonrohren bestehen können, wie sie üblicherweise im Rohrleitungsbau eingesetzt werden. Dabei reichen in aller Regel die für den Rohrleitungsbau entwickelten Gleitring- bzw. Lippendichtungen mit Dichtungselementen aus elastischem Material auch für den Verwendungszweck der Rohre gemäß der Erfindung aus. Ein derart ausgebildeter Schlaufenreaktor kann auf wirtschaftliche Weise an der Stelle der zu sanierenden Böden aufgebaut und nach Beendigung der Arbeiten wieder demontiert werden.

Die Volumina der beiden Reaktorkammern sollten etwa 3 : 1 bis maximal 1 : 1 sein. Da der maximale Innendurchmesser für Rohre bei ca. 4,0 m liegt, läßt sich diese Bedingung relativ leicht erfüllen, wenn für das Strömungsleitrohr Rohre mit einem Innendurchmesser von ca. 2,0 m verwendet werden.

Die Erfindung wird nachstehend anhand der Zeichnung näher erläutert. Es zeigt
- Fig. 1: einen Längsschnitt durch einen Reaktor gemäß der Erfindung,
- Fig. 2: einen teilweisen Horizontalschnitt entlang der Linie II-II in Fig. 1 und die
- Fig. 3a und b: Details der Rohrverbindung entsprechend dem Detail III in Fig. 1.

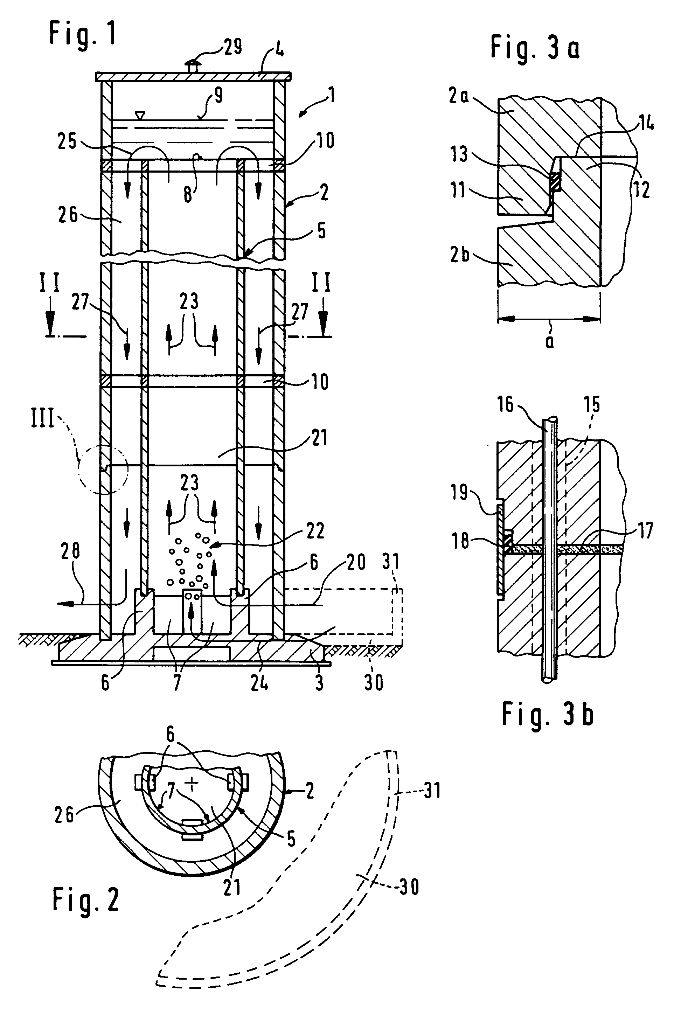

Der in Fig. 1 in einem Längsschnitt dargestellte Reaktor 1 gemäß der Erfindung besitzt einen kreiszylindrischen Außenmantel 2, der auf einem Fundament 3 gelagert ist und durch eine Dachdecke 4 abgedeckt ist; der Außenmantel 2 umschließt so das eigentliche Reaktionsgefäß. Innerhalb des Außenmantels 2 ist konzentrisch zu diesem ein Innenmantel 5 angeordnet, der das Strömungsleitrohr bildet. Der Innenmantel 5 hat eine geringere Höhe als der Außenmantel 2; er ruht auf aus dem Fundament 3 ausragenden Auflagersockeln 6, zwischen denen Unterströmöffnungen 7 belassen sind und ermöglicht über seine Oberkante 8, die unterhalb des Wasserspiegels 9 liegt, eine Überströmung.

Sowohl der Außenmantel 2, als auch der Innenmantel 3 bestehen aus serienmäßig gefertigten Stahlbetonrohren mit den üblichen Stoßfugendichtungen; das Fundament 3 besteht ebenfalls aus Stahlbeton, sinnvollerweise auch der Deckel 4. Durch einfaches Aufeinanderstellen der Rohre lassen sich theoretisch ohne weitere Aussteifungen Turmhöhen von mindestens 30 m ausführen. Es können aber auch Aussteifungen z.B. in Form von Ring- und/oder Radialbalken, ebenfalls aus Stahlbeton, vorgesehen werden, die bei 10 angedeutet sind.

In den Fig. 3a und b sind in vergrößerter Darstellung als Detail III in Fig. 1 zwei unterschiedliche Möglichkeiten für die Stoßfugendichtungen zwischen zwei Rohren dargestellt. Fig. 3a zeigt den einfachsten Fall von Muffenrohren konstanter Wanddicke a, von denen das obere Rohr 2a ein Muffenende 11 und das untere Rohr 2b ein Spitzende 12 bilden. Zwischen dem Muffenende 11 und dem Spitzende 12 befindet sich eine übliche Gleitringdichtung aus einem elastischen Dichtungselement 13, die beim Ineinanderschieben der beiden Rohrenden aktiviert wird. Zwischen der Stirnfläche des Spitzendes 12 und dem Muffenspiegel des Muffenendes 11 besteht eine Druckabstützung 14 zur Übertragung der Vertikalkräfte.

Sind bei großen Turmhöhen aus statischen Gründen zur Sicherstellung der Standsicherheit durchgehende Verbindungen der einzelnen Rohre notwendig, so können diese gemäß Fig. 3b durch in Hüllrohren 15 geführte Spannglieder 16 erreicht werden. Die beiden Rohre 2a' und 2b' sind hier unter Zwischenschaltung eines Mörtelbetts 17 stumpf gestoßen. Die Dichtung ist wiederum durch ein elastisches Dichtungselement 18 bewerkstelligt, das durch manschettenartige Klemmbleche 19 aktiviert wird. Die Klemmbleche 19 können von außen angelegt und mit beiden Rohrenden z.B. durch Schrauben verbunden werden.

Bei der Fertigung der Rohre können unterschiedliche Gegebenheiten berücksichtigt werden. Während in Fig. 3a Rohre dargestellt sind, die ein Spitz- und ein Muffenende aufweisen, stoßen die in Fig. 3b dargestellten Rohre unter Zwischenschaltung der Mörtelschicht 17 stumpf aufeinander. Ebenso können die Rohre auch in den Längen variieren, um die beiden Behälterteile längenmäßig aneinander anzupassen.

Der Reaktor 1 selbst kann in beliebiger Weise betrieben werden. Im dargestellten Ausführungsbeispiel ist ein unterer Zulauf 20 für die Zuführung kontaminierten Schlamms oder Wassers angedeutet, der in den zentralen Innenraum 21 des Strömungsleitrohres 5 führt. Zur Sicherstellung einer guten Sauerstoffversorgung können am Behälterboden Injektionsdüsen für eine feinblasige Begasung 22 installiert sein. Dadurch wird im Strömungsleitrohr 5 eine aufwärts gerichtete Strömung (Pfeile 23) erreicht. Die Luftzuführung zu diesen Düsen ist bei 24 angedeutet.

Durch Überströmung der Oberkante 8 des Strömungsleitrohrs 5 (Pfeile 25) entsteht im äußeren Ringraum 26 eine abwärts gerichtete Strömung (Pfeile 27). Aus dem äußeren Ringraum 26 heraus ist auch ein Ablauf 28 für gereinigten Schlamm angedeutet.

Die Zu- und Ableitungen können in einfacher Weise auf dem durch das Fundament 3 gebildeten Reaktorboden verlegt und durch Durchbrechungen im Außenmantel 2 geführt werden.

Der Reaktor 1 kann in der Dachdecke 4 mit einer Abluftleitung 29 versehen sein, um eventuell flüchtige Schadstoffe durch eine nachgeschaltete Reinigungsstufe nicht unkontrolliert in die Umwelt zu entlassen. Als zusätzliche Sicherheitsmaßnahme kann das Fundament außenseitig umlaufend mit einer Bodenplatte 30 mit Randbrüstung 31 versehen sein, so daß eine Auffangwanne für etwa aus dem Reaktor unkontrolliert austretendes Material entsteht.

## Patentansprüche

1. Reaktor zur biologischen Reinigung von schadstoffhaltigem Wasser im Schlaufenbetrieb mit einem geschlossenen zylindrischen Gefäß, in dem konzentrisch ein unter- und überströmbares Strömungsleitrohr angeordnet und Mittel zur Aufrechterhaltung des Schlaufenbetriebs vorgesehen sind, dadurch gekennzeichnet, daß sowohl das Gefäß (2), als auch das Strömungsleitrohr (5) aus vorgefertigten Stahlbetonrohren jeweils gleichen Durchmessers bestehen, die unter Zwischenschaltung von Fugendichtungen (13, 18) aus elastischem Material stirnseitig druckfest miteinander verbunden sind.

2. Reaktor nach Anspruch 1, dadurch gekennzeichnet, daß sowohl das Gefäß (2), als auch das Strömungsleitrohr (5) auf einem gemeinsamen Fundament (3) ruhen.

3. Reaktor nach Anspruch 2, dadurch gekennzeichnet, daß das Strömungsleitrohr (5) auf einer Mehrzahl von aus dem Fundament aufragenden Auflagersockeln (6) aufgelagert ist.

4. Reaktor nach einem der Ansprüche 1 bis 3, dadurch gekennzeichnet, daß das Gefäß (2) und das Strömungsleitrohr (5) durch Ring- und/oder Radialbalken (10) miteinander verbunden sind.

5. Reaktor nach Anspruch 4, dadurch gekennzeichnet, daß die Ring- und/oder Radialbalken (10) aus Stahlbeton bestehen und jeweils im Bereich der Stöße der einzelnen Rohre angeordnet sind.

## Claims

1. A reactor for the biological purification of contaminated water in loop-type operation with a closed cylindrical vessel, in which is arranged concentrically a flow duct in which the flow can be under or over, and in which means are provided for maintaining the loop-type operation, characterised in that both the vessel (2) and the flow duct (5) respectively comprise prefabricated reinforced concrete pipes which are of equal diameter and which, with the interposition of joint seals (13, 18) of resilient material, are connected together at their end faces in a pressure-resistant manner.

2. A reactor according to Claim 1, characterised in that both the vessel (2) and the flow duct (5) are mounted on a common foundation (3).

3. A reactor according to Claim 2, characterised in that the flow duct (5) is supported on a plurality of support pedastals (6) projecting from the foundation.

4. A reactor according to any one of Claims 1 to 3, characterised in that the vessel (2) and the flow duct (5) are connected to one another by annular and/or radial beams (10).

5. A reactor according to Claim 4, characterised in that the annular and/or radial beams (10) are composed of reinforced concrete and are each arranged in the vicinity of the joints of the individual pipes.

## Revendications

1. Réacteur d'épuration biologique d'eau contenant des produits nocifs, fonctionnant en bouche, avec un récipient cylindrique fermé dans lequel est disposé concentriquement un tube de guidage d'écoulement, pouvant être traversé par un écoulement venant du dessous et du dessus, et étant prévus des moyens pour maintenir le fonctionnement en bouche, caractérisé en ce que, tant le récipient (2), qu'également le tube de guidage d'écoulement (5) sont constitués de tubes en béton armé préfabriqués, ayant le même diamètre et assemblés frontalement de façon résistant à la pression, par interposition de joints d'étanchéité (13, 18) réalisés en un matériau élastique.

2. Réacteur selon la revendication 1, caractérisé en ce que, tant le récipient (2), qu'également le tube de guidage d'écoulement (5) reposent sur une fondation (3) commune.

3. Réacteur selon la revendication 2, caractérisé en ce que le tube de guidage d'écoulement (5) est posé sur une pluralité de socles (6) faisant saillie hors de la fondation.

4. Réacteur selon l'une des revendications 1 à 3, caractérisé en ce que le récipient (2) et le tube de guidage d'écoulement (5) sont assemblés au moyen de poutres annulaires et/ou radiales (10).

5. Réacteur selon la revendication 4, caractérisé en ce que les poutres annulaires et/ou radiales (10) sont en béton armé et sont chacune disposées dans la zone des joints des différents tubes.
